# EUROPEAN PATENT APPLICATION

(11) **EP 2 605 373 A2**
(43) Date of publication of application: **19.06.2013**
(21) Application number: 12196920.8
(22) Date of filing: 13.12.2012
(51) Int. Cl.: H02K 1/27

(54) **Motor**

(30) Priority: 13.12.2011 JP 2011272661
(71) Applicant: Samsung Electronics Co., Ltd, Gyeonggi-do 443-742 (KR)
(72) Inventor: Kenji, Kitajima, Osakabu (JP); Futoshi, Yamane, Osakabu (JP)
(74) Representative: Walaski, Jan Filip

(57) **Abstract**

Disclosed is a motor including a stator having coils and a rotor rotated with respect to the stator, wherein the rotor is provided with a plurality of flux barriers arranged at intervals in a circumferential direction to restrain detouring of magnetic flux in the rotor, a permanent magnet is fitted in each of the flux barriers, and variable magnetic resistance members, magnetic resistance of which increases with increasing temperature, are provided at areas of the rotor closer to the stator than the flux barriers.

## Description

Embodiments of the present invention relate to a motor.

Japanese Patent Application Publication No. 2010-154755 discloses a motor including a ring-shaped stator having a plurality of coils and a rotor disposed inside the stator, the rotor having a permanent magnet embed therein, wherein the rotor is rotated by interaction between a rotating magnetic field generated by the coils and a magnetic field generated by the permanent magnet of the rotor.

For a motor using a permanent magnet as a field magnet, field flux is uniform, and therefore, stray voltage is increased in proportion to rpm. Also, the maximum rpm at a predetermined torque area is decided based on a relationship between stray voltage and an output voltage of an inverter driving circuit. Specifically, current supplied to the motor is reduced due to limitations in output voltage of the inverter driving circuit with the result that torque is lowered, and the maximum rpm is kept low.

In the motor disclosed in Japanese Patent Application Publication No. 2010-154755, the coils are disposed at flux barriers between different poles of the magnet, and the amount and direction of current supplied to the coils are controlled based on rpm of the rotor to control magnetic flux and directions of magnetic poles, thereby achieving high torque and high power.

In the motor disclosed in Japanese Patent Application Publication No. 2010-154755, however, a construction to control the amount current supplied to the coils disposed at the flux barriers between the different poles of the magnet based on rpm of the rotor is additionally provided with the result that control is complicated, and cost is increased.

Therefore, it is an aspect of the present invention to provide a motor wherein magnetic flux is adjusted based on rpm of a rotor through a relatively simple construction.

Additional aspects of the invention will be set forth in part in the description which follows and, in part, will be obvious from the description, or may be learned by practice of the invention.

In accordance with an aspect of the present invention, a motor includes a stator having coils and a rotor rotated with respect to the stator, wherein the rotor is provided with a plurality of flux barriers arranged at intervals in a circumferential direction to restrain detouring of magnetic flux in the rotor, a permanent magnet is fitted in each of the flux barriers, and variable magnetic resistance members, magnetic resistance of which increases with increasing temperature, are provided at areas of the rotor closer to the stator than the flux barriers.

When the rotor is rotated at high speed, heat is generated from the rotor due to iron loss of the rotor. As temperature is increased by heat generated from the rotor, the magnetic resistance of the variable magnetic resistance members increases. As a result, magnetic flux of the permanent magnets passing through the variable magnetic resistance members is reduced, thereby restraining the increase of stray voltage and thus enlarging an operation area or achieving high efficiency. Also, a complicated control circuit to variably control magnetic flux of the permanent magnets is omitted, thereby miniaturizing the motor or achieving cost reduction.

The motor may further include a controller to apply a harmonic component to current supplied to the coils of the stator.

When the temperature of the rotor is relatively low, current, to which a harmonic component has been applied, is supplied to the coils of the stator to accelerate the generation of heat from the rotor due to iron loss of the rotor. As a result, the magnetic resistance of the variable magnetic resistance members increases to adjust magnetic flux, thereby improving motor performance. In addition, an existing inverter driving system to control switching an inverter circuit may be used as the controller to apply the harmonic component, thereby achieving cost reduction.

Each of the flux barriers may include a rectangular fitting opening and inclined openings extending from opposite ends of the fitting opening toward the stator such that the inclined openings are inclined outward, the plate-shaped permanent magnet may be fitted at least in the fitting opening, and the variable magnetic resistance members may be installed at least within areas at which plate-shaped surfaces of the permanent magnets are projected on the stator.

In this embodiment, the variable magnetic resistance members are installed only at areas at which it is intended to reduce magnetic flux of the permanent magnets.

Consequently, the used amount of the variable magnetic resistance members is reduced, thereby achieving cost reduction. Also, the outer circumferential portion of the rotor is cut, and the variable magnetic resistance members are fitted in the cutout portions. Consequently, the variable magnetic resistance members are easily assembled in the rotor, thereby improving assembly efficiency.

Each of the flux barriers may include a pair of rectangular fitting openings, in which the plate-shaped permanent magnets are fitted, the rectangular fitting openings being disposed at a right angle or obtuse angle to each other, and the variable magnetic resistance members may be installed at least within areas at which plate-shaped surfaces of the permanent magnets are projected on the stator.

In this embodiment, the variable magnetic resistance members are installed only at areas at which it is intended to reduce magnetic flux of the permanent magnets fitted in the fitting openings. Consequently, the used amount of the variable magnetic resistance members is reduced, thereby achieving cost reduction.

These and/or other aspects of the invention will become apparent and more readily appreciated from the following description of the embodiments, taken in conjunction with the accompanying drawings of which:
FIG. 1 is a plan view showing the construction of a motor according to an embodiment of the present invention;
FIG. 2 is a block diagram showing the construction of a controller connected to the motor;
FIG. 3 is a graph showing a relationship between the number of rotations and torque and efficiency of the motor;
FIG. 4 is a plan view showing the construction of a motor according to another embodiment of the present invention;
FIG. 5 is a plan view showing the construction of a motor according to another embodiment of the present invention;
FIG. 6 is a plan view showing the construction of a motor according to another embodiment of the present invention; and
FIG. 7 is a plan view showing the construction of a motor according to a further embodiment of the present invention.

Reference will now be made in detail to the embodiments of the present invention, examples of which are illustrated in the accompanying drawings, wherein like reference numerals refer to like elements throughout. The configurations disclosed in the embodiments are only exemplary and do not encompass the full technical spirit of the invention, and thus it will be appreciated that the embodiments may be variously modified and changed.

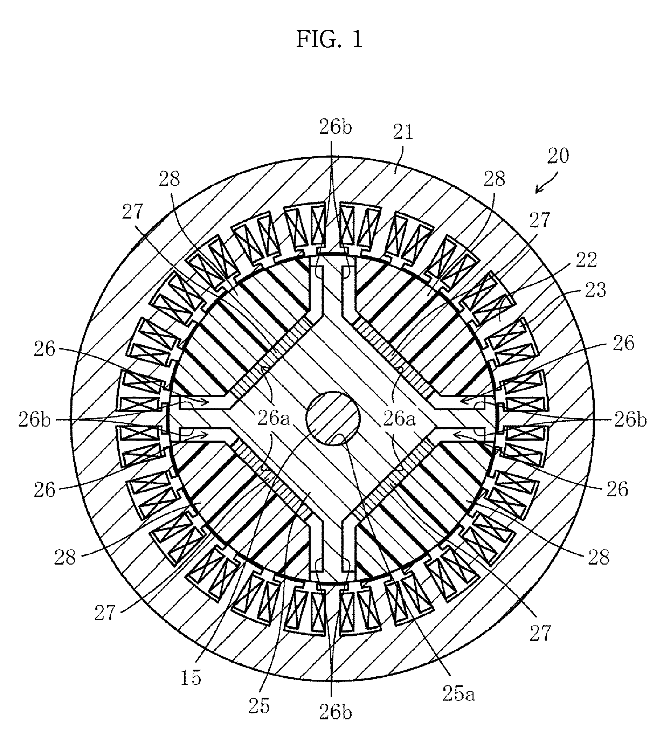

FIG. 1 is a plan view showing the construction of a motor according to an embodiment of the present invention. As shown in FIG. 1, a motor 20 is an inner rotor type motor including a ring-shaped stator 21 and a rotor 25 rotatably mounted inside the stator 21.

The stator 21 is configured by stacking donut-shaped electromagnetic steel sheets in a cylindrical shape. The stator 21 is provided at the inner circumference thereof with a plurality of teeth 22 protruding inward in the radial direction at intervals in the circumferential direction and extending in the axial direction. Coils to generate a rotating magnetic field are wound on the teeth 22.

The rotor 25 is configured by stacking electromagnetic steel sheets. A shaft hole 25a is formed in the center of the rotor 25. A rotary shaft 15 is fitted in the shaft hole 25a. The rotor 25 is rotated inside the stator 21 together with the rotary shaft 15.

At the outer circumference of the shaft hole 25a of the rotor 25 is formed a plurality of flux barriers 26 arranged at intervals in the circumferential direction. Each of the flux barriers 26 includes a rectangular fitting opening 26a and inclined openings 26b extending from opposite ends of the fitting opening 26a toward the stator 21 such that the inclined openings 26b are inclined outward.

A plate-shaped permanent magnet 27 is fitted in each fitting opening 26a. The inclined openings 26b form air gaps to prevent magnetic flux from detouring toward neighboring flux barriers 26.

In the motor 20 with the above-stated construction, current is sequentially supplied to the coils 23 of the stator 21 so that the rotor 25 is rotated by interaction between a rotating magnetic field generated by the coils 23 and a magnetic field generated by the permanent magnets 27 of the rotor 25. The number of rotations of the motor 20 is controlled based on velocity at which current is sequentially supplied to the coils 23.

As the rotor 25 having the permanent magnets 27 is rotated, induced electromotive force based on the number of rotations of the rotor 25 is generated in the stator 21. The induced electromotive force is generated in a direction to offset voltage applied to the coils 23 of the stator 21 from the outside. For this reason, the maximum rpm of the motor 20 is limited such that stray voltage is equal to or less than voltage applied to the coils 23 from the outside.

The motor 20 according to this embodiment is configured to reduce magnetic flux of the permanent magnets 27 when the rotor 25 is rotated at high speed, thereby restraining the increase of stray voltage.

Specifically, variable magnetic resistance members 28 are installed at the rotor 25 outside the flux barriers 26 in the radial direction. The magnetic resistance of the variable magnetic resistance members 28 increases with the increase of temperature.

When the rotor 25 is rotated at high speed, heat is generated from the rotor 25 due to iron loss of the rotor 25 or joule loss of the coils 23. As temperature is increased by heat generated from the rotor 25, the magnetic resistance of the variable magnetic resistance members 28 increases. As a result, magnetic flux of the permanent magnets 27 passing through the variable magnetic resistance members 28 is reduced, thereby restraining the increase of stray voltage and thus enlarging an operation area or achieving high efficiency. In this construction, a complicated control circuit to variably control magnetic flux of the permanent magnets 27 is omitted, thereby miniaturizing the motor 20 or achieving cost reduction.

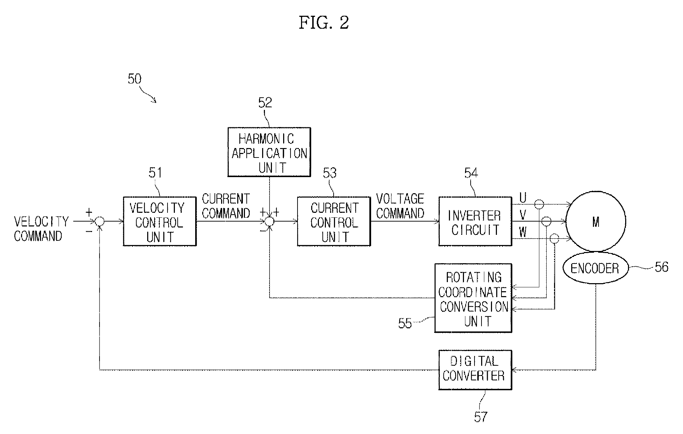

When the temperature of the rotor 25 is relatively low, e.g. when the operation of the motor 20 is commenced, a harmonic component may be applied to current supplied to the coils 23 of the stator 21. Hereinafter, the construction of a controller 50 to apply a harmonic component will be described with reference to FIG. 2.

FIG. 2 is a block diagram showing the construction of the controller connected to the motor. As shown in FIG. 2, the controller 50 is configured to control switching of an inverter circuit 54. A velocity control unit 51 outputs a current command based on rotational angle frequency and velocity commands of the motor 20. A harmonic application unit 52 applies a harmonic component to the current command output from the velocity control unit 51. A current control unit 53 outputs a voltage command based on d-axis current and q-axis current.

An inverter circuit 54 converts rectified direct current into three-phase alternating current and supplies the three-phase alternating current to the motor 20. A rotating coordinate conversion unit 55 coordinate-converts fixed coordinate current obtained by three-phase/two-axis converting the motor current to output d-axis and q-axis current. An encoder 56 detects the position of the rotor 25. A digital converter 57 calculates a rotational angle frequency based on the detection result of the encoder 56. The rotational angle frequency is input to the velocity control unit 51.

As a result, generation of heat from the rotor 25 due to iron loss of the rotor 25 is accelerated by the harmonic component applied to the current supplied to the motor 20. An existing inverter driving system to control switching of the inverter circuit 54 is used as the controller 50 to apply the harmonic component, thereby achieving cost reduction.

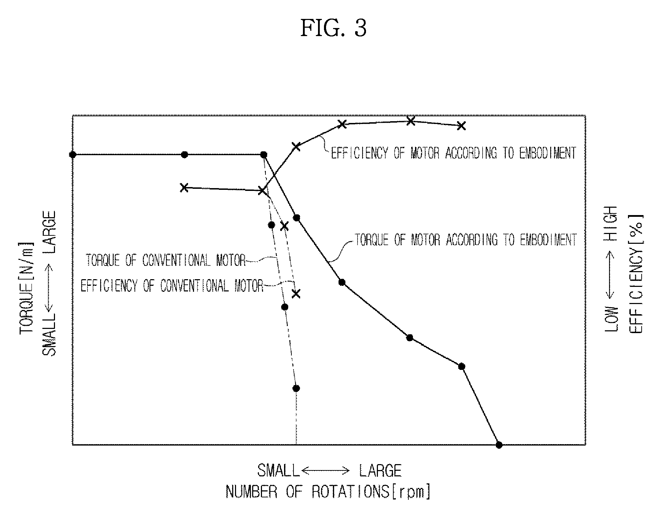

FIG. 3 is a graph showing a relationship between the number of rotations and torque and efficiency of the motor. As shown in FIG. 3, the motor 20 having the variable magnetic resistance members 28 according to this embodiment has the maximum rpm greater than that of a conventional motor having no variable magnetic resistance members 28, and therefore, an operation area is increased. Also, the motor 20 according to this embodiment has higher efficiency than the conventional motor, and therefore, power consumption is reduced.

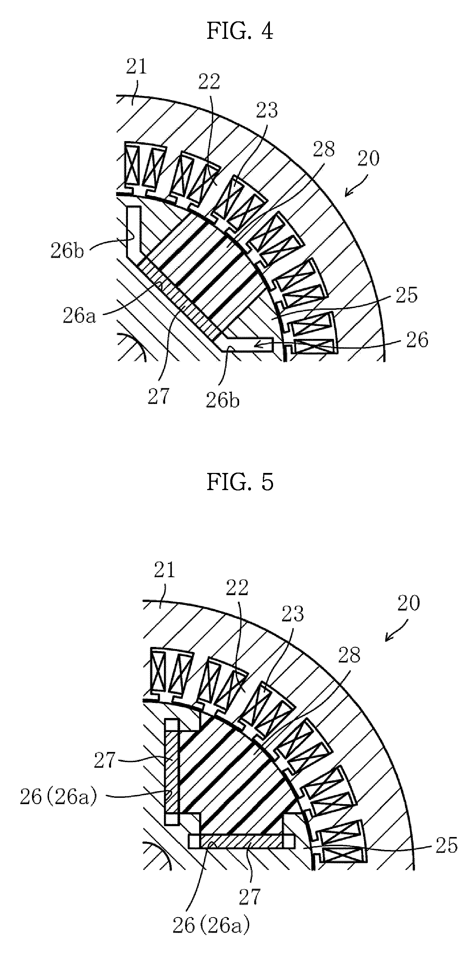

FIG. 4 is a plan view showing the construction of a motor according to another embodiment of the present invention. This embodiment is identical to the embodiment of FIG. 1 except for the shape of variable magnetic resistance members 28. Consequently, elements of this embodiment identical to those of the embodiment of FIG. 1 are denoted by the same reference numerals, and only the difference therebetween will be described.

As shown in FIG. 4, a plurality of flux barriers 26 arranged at intervals in the circumferential direction is formed at the outer circumference of a shaft hole 25a of a rotor 25. Each of the flux barriers 26 includes a rectangular fitting opening 26a and inclined openings 26b extending from opposite ends of the fitting opening 26a toward the stator 21 such that the inclined openings 26b are inclined outward.

A plate-shaped permanent magnet 27 is fitted in each fitting opening 26a. The inclined openings 26b form air gaps to prevent magnetic flux from detouring toward neighboring flux barriers 26.

Variable magnetic resistance members 28 are installed at the rotor 25 outside the flux barriers 26 in the radial direction. Specifically, the variable magnetic resistance members 28 are installed within areas at which plate-shaped surfaces of the permanent magnets 27 are projected on the stator 21. The magnetic resistance of the variable magnetic resistance members 28 increases with increasing temperature.

In this embodiment, the variable magnetic resistance members 28 are installed only at areas at which it is intended to reduce magnetic flux of the permanent magnets 27. Consequently, the used amount of the variable magnetic resistance members 28 is reduced, thereby achieving cost reduction. Also, the outer circumferential portion of the rotor 25 is cut, and the variable magnetic resistance members 28 are fitted in the cutout portions. Consequently, the variable magnetic resistance members 28 are easily assembled in the rotor 25, thereby improving assembly efficiency.

FIG. 5 is a plan view showing the construction of a motor according to another embodiment of the present invention. This embodiment is identical to the embodiment of FIG. 1 except for the shape of flux barriers 26. Consequently, elements of this embodiment identical to those of the embodiment of FIG. 1 are denoted by the same reference numerals, and only the difference therebetween will be described.

As shown in FIG. 5, a plurality of flux barriers 26 arranged at intervals in the circumferential direction is formed at the outer circumference of a shaft hole 25a of a rotor 25. Each of the flux barriers 26 includes a pair of rectangular fitting openings 26a disposed perpendicular to each other. A plate-shaped permanent magnet 27 is fitted in each fitting opening 26a.

Variable magnetic resistance members 28 are installed at the rotor 25 outside the flux barriers 26 in the radial direction. Specifically, the variable magnetic resistance members 28 are installed within areas at which plate-shaped surfaces of the permanent magnets 27 fitted in the respective fitting openings 26a are projected on the stator 21. The magnetic resistance of the variable magnetic resistance members 28 increases with the increase of temperature.

In this embodiment, the variable magnetic resistance members 28 are installed only at areas at which it is intended to reduce magnetic flux of the permanent magnets 27. Consequently, the used amount of the variable magnetic resistance members 28 is reduced, thereby achieving cost reduction.

Furthermore, the motor may be configured as follows.

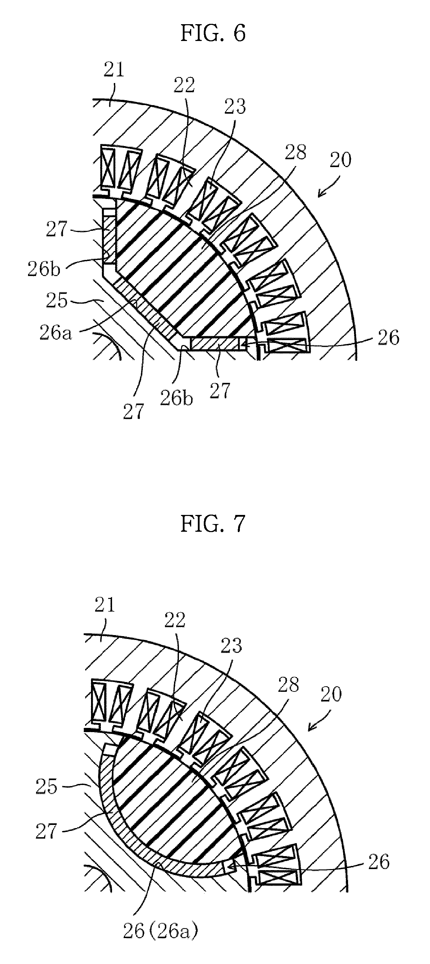

As shown in FIG. 6, for example, each flux barrier 26 may include a rectangular fitting opening 26a and inclined openings 26b extending from opposite ends of the fitting opening 26a toward a stator 21 such that the inclined openings 26b are inclined outward, and permanent magnets 27 may be fitted in the fitting opening 26a and the inclined openings 26b.

Also, as shown in FIG. 7, each flux barrier 26 may include a curved fitting opening 26a, and a curved plate-shaped permanent magnet 27 may be fitted in the curved fitting opening 26a.

In the embodiments, an inner rotor type motor including a rotor 25 disposed at the inner circumference of a stator 21 is used as the motor 20. Alternatively, an outer rotor type motor including a rotor 25 rotated at the outer circumference of a stator 21 may be used as the motor 20.

Also, in the embodiment of Fig. 5, a pair of fitting openings 26a constituting each flux barrier 26 is disposed perpendicular to each other. Alternatively, the angle between the fitting openings 26a may be an obtuse angle.

As is apparent from the above description, the embodiments have the following effects. When the rotor is rotated at high speed, heat is generated from the rotor due to iron loss of the rotor. As temperature is increased by heat generated from the rotor, the magnetic resistance of the variable magnetic resistance members increases. As a result, magnetic flux of the permanent magnets passing through the variable magnetic resistance members is reduced, thereby restraining the increase of stray voltage and thus enlarging an operation area or achieving high efficiency. Also, a complicated control circuit to variably control magnetic flux of the permanent magnets is omitted, thereby miniaturizing the motor or achieving cost reduction.

Although a few embodiments of the present invention have been shown and described, it would be appreciated by those skilled in the art that changes may be made in these embodiments without departing from the principles of the invention, the scope of which is defined in the claims.

## Claims

1. A motor comprising a stator having coils and a rotor rotated with respect to the stator, wherein
the rotor is provided with a plurality of flux barriers arranged at intervals in a circumferential direction to restrain detouring of magnetic flux in the rotor,
a permanent magnet is fitted in each of the flux barriers, and
variable magnetic resistance members, magnetic resistance of which increases with increasing temperature, are provided at areas of the rotor closer to the stator than the flux barriers.

2. The motor according to claim 1, further comprising a controller to apply a harmonic component to current supplied to the coils of the stator.

3. The motor according to claim 1 or 2, wherein
each of the flux barriers comprises a rectangular fitting opening and inclined openings extending from opposite ends of the fitting opening toward the stator such that the inclined openings are inclined outward,
the plate-shaped permanent magnet is fitted at least in the fitting opening, and
the variable magnetic resistance members are installed at least within areas at which plate-shaped surfaces of the permanent magnets are projected on the stator.

4. The motor according to claim 1 or 2, wherein
each of the flux barriers comprises a pair of rectangular fitting openings, in which the plate-shaped permanent magnets are fitted, the rectangular fitting openings being disposed at a right angle or obtuse angle to each other, and
the variable magnetic resistance members are installed at least within areas at which plate-shaped surfaces of the permanent magnets are projected on the stator.
